# DEMANDE DE BREVET EUROPEEN

(11) **EP 1 176 376 A1**
(43) Date de publication de la demande: **30.01.2002**
(21) Numéro de dépôt: 01401873.3
(22) Date de dépôt: 12.07.2001
(51) Int. Cl.: F25D 25/04, F25D 13/06

(54) **Tunnel cryogénique équipé de déflecteurs de gaz de réfrigération**

(30) Priorité: 25.07.2000 FR 0009719
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Taylor, Robert, 1300 Wavre (BE)
(74) Mandataire: Mellul-Bendelac, Sylvie Lisette

(57) **Abrégé**

Tunnel cryogénique (1) pour la réfrigération de produits, notamment alimentaires (2), comprenant un convoyeur (4) des produits et des moyens (6) destinés à limiter le débit de gaz froid de réfrigération circulant dans ledit tunnel ; ce tunnel comprend au moins un déflecteur (6) comportant trois volets (7, 8, 9) disposés au-dessus du convoyeur, s'étendant transversalement à celui-ci, articulés l'un à l'autre de manière à délimiter trois côtés d'un parallélogramme ; le volet central (8) est horizontal et à peu près parallèle au convoyeur et articulé sur ses côtés opposés aux deux autres volets articulés eux-mêmes à la structure (5) du tunnel, et des moyens sont prévus pour commander le relèvement du volet central jusqu'à une hauteur appropriée (h) au-dessus du convoyeur, afin de permettre le passage des produits sous ledit volet central .

## Description

La présente invention a pour objet un tunnel cryogénique pour la réfrigération de produits, notamment alimentaires, du type comprenant un convoyeur des produits et des moyens destinés à limiter le débit de gaz froid de réfrigération circulant dans ledit tunnel.

Il existe dans l'art antérieur des tunnels à déflecteurs montés aux extrémités du tunnel pour réduire la consommation de gaz inutile ainsi que les entrées d'air ambiant. Il peut se produire des contacts entre les déflecteurs et les produits transitant dans le tunnel, ce qui n'est pas souhaitable pour des raisons hygiéniques lorsqu'il s'agit de produits alimentaires. En effet de tels contacts peuvent créer une contamination et des transferts de condensat, et générer des problèmes annexes. En définitive, ces déflecteurs ne devraient pas entrer en contact avec les produits tout en fournissant une résistance suffisante au déplacement du gaz froid.

On a réalisé dans l'art antérieur des déflecteurs en acier inoxydable, en tissus ou matières plastiques divers. Ces déflecteurs doivent souvent être découpés pour dégager un passage permettant le mouvement du produit sur le tapis convoyeur et pour réduire les risques de contamination de produits alimentaires. Mais lorsque ces précautions ont été réalisées, ils deviennent beaucoup moins efficaces dans la limitation du déplacement de gaz et d'air.

L'invention a donc pour but de proposer un tunnel cryogénique réalisé de manière à éliminer ces inconvénients.

Conformément à l'invention, le tunnel cryogénique comprend au moins un déflecteur comportant trois volets disposés au-dessus du convoyeur, s'étendant transversalement à celui-ci, articulés l'un à l'autre de manière à délimiter trois côtés d'un parallélogramme, le volet central étant horizontal et à peu près parallèle au convoyeur et articulé sur ses côtés opposés aux deux autres volets articulés eux-mêmes à la structure du tunnel ; des moyens sont prévus pour commander le relèvement du volet central jusqu'à une hauteur appropriée au-dessus du convoyeur, afin de permettre le passage des produits sous ledit volet central.

La hauteur des deux volets d'extrémité peut être ajustée de manière que le volet central s'étende horizontalement à une faible distance au-dessus du tapis horizontal convoyeur lorsque ce dernier ne porte pas de produits. Quand ces derniers se présentent, les moyens précités sont déclenchés et commandent le relèvement du volet central à la hauteur juste nécessaire pour autoriser le défilement des produits sous ce volet central et sans contact avec celui-ci.

Suivant un mode de réalisation possible de l'invention, lesdits moyens de commande du relèvement du volet central comprennent un vérin monté sur la structure du tunnel et dont la tige est articulée sur une biellette solidaire d'un volet contigu. L'actionnement du vérin entraîne le basculement de la biellette, du volet solidaire de celle-ci et de l'ensemble du déflecteur pour relever ou abaisser le volet central horizontal.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en coupe longitudinale partielle simplifiée d'une forme de réalisation du tunnel cryogénique selon l'invention, le déflecteur étant suspendu au plafond du tunnel et ses volets latéraux s'étendant verticalement en l'absence de produit en défilement sur le tapis convoyeur.

La figure 2 est une vue en coupe transversale simplifiée suivant la ligne II- II de la figure 1.

La figure 3 est une vue en élévation longitudinale partielle simplifiée correspondant à la figure 1, montrant des produits en défilement sous le déflecteur relevé de la hauteur nécessaire au passage des produits.

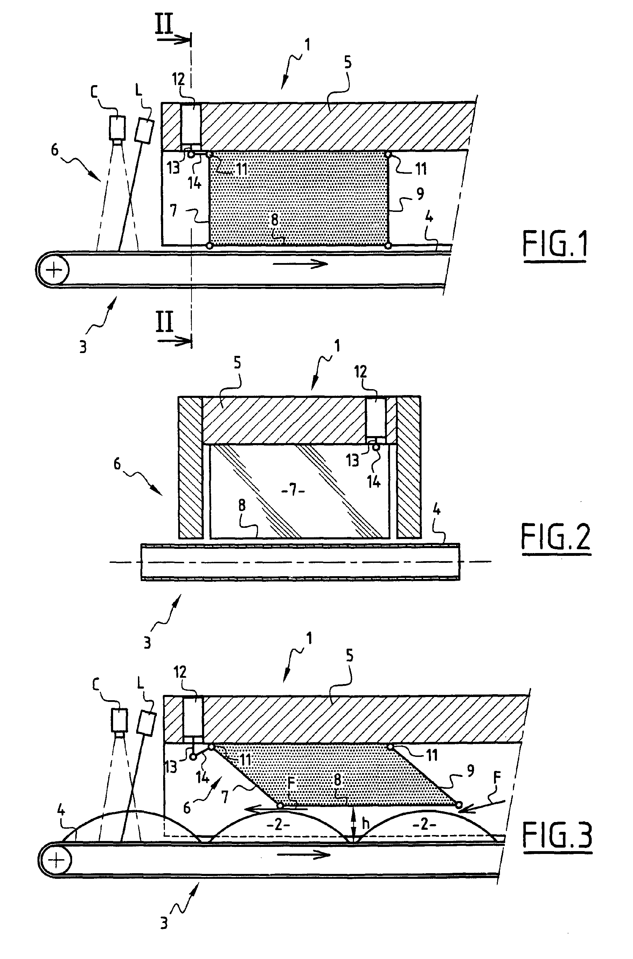

Le tunnel cryogénique 1, dont la partie d'entrée des produits est schématiquement représentée aux dessins, est destiné à la réfrigération de produits, notamment alimentaires, tels que les produits 2 représentés à la figure 3.

Le tunnel 1 comprend un convoyeur horizontal 3 constitué d'un tapis transporteur 4 sur lequel peuvent être disposés les produits 2 à réfrigérer par un gaz froid soufflé sur les produits 2 par des moyens connus en soi et non représentés. Au-dessus du tapis convoyeur 4, le tunnel 1 est fermé par un plafond 5.

Le tunnel 1 est équipé d'au moins un déflecteur 6 à l'une des ses extrémités, et de préférence d'un tel déflecteur 6 à chacune de ses extrémités. Le déflecteur 6 comporte trois volets 7, 8, 9, disposés au-dessus du convoyeur 4, s'étendant transversalement à celui-ci, articulés l'un à l'autre de manière à délimiter trois côtés d'un parallélogramme dont le quatrième serait la paroi du plafond 5.

Le volet central 8 est horizontal et à peu près parallèle au convoyeur 4. Ce volet central 8 est en outre articulé sur ses côtés opposés aux deux volets latéraux 7, 8 eux-mêmes articulés à leurs extrémités supérieures 11 au plafond 5 du tunnel (ou en variante, à d'autres éléments de structure du tunnel tels que les montants de support du convoyeur).

Ce dernier est en outre équipé de moyens de commande du relèvement du volet central 8 au-dessus du convoyeur horizontal 4 jusqu'à une hauteur appropriée permettant le passage des produits 2 au-dessous du volet central 8. Dans le mode de réalisation représenté, ces moyens comprennent pour chaque déflecteur 6, un vérin 12 monté sur le plafond 5 du tunnel et dont la tige 13 est articulée sur une biellette 14 solidaire du volet contigu 7. La biellette 14 s'étend par exemple horizontalement lorsque la tige 13 est rétractée dans le corps du vérin 12 (figure 1), les volets latéraux 7, 9 étant alors verticaux et le volet central 8 dans sa position basse, juste au-dessus du convoyeur 4.

L'actionnement du vérin 12 entraîne le basculement vers le bas de la biellette 14 qui fait basculer le volet 7 autour de l'articulation 11 en le plaçant dans une position inclinée (figure 3). Ce basculement entraîne le relèvement du volet horizontal 8 à une hauteur h légèrement supérieure à la hauteur des produits 2, et le basculement du second volet latéral 9 autour de son articulation 11, jusqu'à ce que le déflecteur prenne une position permettant le défilement des produits 2 au-dessous du volet central 8 (figure 3).

Cet agencement du déflecteur 6 ou préférentiellement de tels déflecteurs 6 aux extrémités opposées du tunnel permet de limiter au strict nécessaire le volume de gaz de réfrigération des produits 2 ainsi que les entrées d'air ambiant. Le gaz de réfrigération circule entre la surface des produits 2 et le volet central 8 comme représenté par les flèches F à la figure 3.

Le déflecteur 6 peut être commandé de manière à se relever automatiquement de la hauteur h voulue lors de l'arrivée de produits d'une hauteur déterminée. Ce résultat peut être obtenu en équipant le tunnel de moyens de détection de l'arrivée des produits devant le déflecteur 6 et de commande des moyens de relèvement 12 du volet central 8 de la hauteur h juste nécessaire. Les moyens de détection peuvent comprendre par exemple un laser de balayage (scanner) L et une caméra vidéo C, adaptés pour détecter les produits et mesurer leur hauteur, et pour commander corrélativement le relèvement du volet central 8 à une hauteur légèrement supérieure à la hauteur des produits 2.

Le signal de commande du laser et de la caméra vidéo peut être combiné à la vitesse de défilement du convoyeur 4 et à la longueur du tunnel pour provoquer l'ouverture automatique des déflecteurs 6, afin de permettre le défilement des produits lorsque ceux-ci parviennent devant les déflecteurs d'entrée et de sortie du tunnel.

En variante, le ou les déflecteurs peuvent être également commandés manuellement par un système à vis ou similaire, au lieu de l'actionneur à vérin 12, ces systèmes permettant le réglage de la hauteur du volet central 8 au-dessus du convoyeur 4. Il serait également envisageable de déclencher le relèvement du volet central 8 par soufflage réglable sur les volets latéraux et de le laisser retomber par gravité.

## Revendications

1. Tunnel cryogénique (1) pour la réfrigération de produits, notamment alimentaires (2), comprenant un convoyeur (4) des produits et des moyens destinés à limiter le débit de gaz froid de réfrigération circulant dans ledit tunnel, **caractérisé en ce qu'**il comprend au moins un déflecteur (6) comportant trois volets (7, 8, 9) disposés au-dessus du convoyeur s'étendant transversalement à celui-ci, articulés l'un à l'autre de manière à délimiter trois côtés d'un parallélogramme, le volet central (8) étant horizontal et à peu près parallèle au convoyeur et articulé sur ses côtés opposés aux deux autres volets articulés eux-mêmes à la structure du tunnel, et **en ce que** des moyens sont prévus pour commander le relèvement du volet central jusqu'à une hauteur appropriée (h) au-dessus du convoyeur, afin de permettre le passage des produits sous ledit volet central.

2. Tunnel selon la revendication 1, **caractérisé en ce que** lesdits moyens de commande du relèvement du volet central (8) comprennent un vérin (12) monté sur la structure (5) du tunnel (1) et dont la tige (13) est articulée sur une biellette (14) solidaire d'un volet contigu (7), de sorte que l'actionnement du vérin entraîne le basculement de la biellette, du volet solidaire de celle-ci et de l'ensemble du déflecteur pour relever le volet central horizontal à une hauteur (h) légèrement supérieure à la hauteur des produits (2) en défilement sur le convoyeur (4).

3. Tunnel selon la revendication 1 ou 2, **caractérisé en ce qu'**il est en outre équipé de moyens de détection de l'arrivée de produits (2) devant le déflecteur (6), de mesure de leur hauteur et de commande corrélative desdits moyens (12) de relèvement du volet central (8).

4. Tunnel selon la revendication 3, **caractérisé en ce que** lesdits moyens de détection comprennent un laser et une caméra vidéo adaptés pour détecter les produits (2) et mesurer leur hauteur et pour commander corrélativement le relèvement du volet central (8) à une hauteur appropriée (h).
